# EUROPEAN PATENT APPLICATION

(11) **EP 2 945 177 A1**
(43) Date of publication of application: **18.11.2015**
(21) Application number: 14167905.0
(22) Date of filing: 12.05.2014
(51) Int. Cl.: H01H 37/76, H01H 29/22

(54) **Non-reversible disconnection or break and make device for electrical appliances**

(71) Applicant: Vlaamse Instelling voor Technologisch Onderzoek (VITO), 2400 Mol (BE)
(72) Inventor: Leemans, Filip, B-2260 Westerlo (BE)
(74) Representative: IPLodge bvba

(57) **Abstract**

A disconnection device (10) for electrically disconnecting an electrical appliance (8) from an electrode pair (1, 2) comprises an electrically isolating holder (11) between the electrode pair (1, 2). The holder comprises an electrically conductive substance (5) disconnectable from the electrode pair (1, 2) under gravity forces.

## Description

### Field of the invention

The present invention relates to the field of disconnection or break and make devices, more particularly to the field of disconnection or break and make devices for electrically disconnecting an electrical appliance from an electrode pair and for connecting electrodes to another function such as a replacement device or a bypass. In particular embodiments, the electrical appliance to be disconnected may for instance be a battery cell or a light source.

### Background of the invention

The move towards a greener environment is connected with a greater need for energy storage. Whether it is in vehicles or in in-house applications, battery packs provide a good solution. Large scale deployment with consumers requires a certain amount of safety precautions and reliability. Large scale production requires a minimum cost for these measures.

A battery pack or multi-cell battery assembly comprises a pre-determined number of battery cells. These cells can be connected in series, in parallel or in a combination of both. The combination depends on the required voltage, current and battery type. Dependent on the application, a safety system on cell level may be used. Examples are voltage monitoring, charge balancing etc.

Deployment of the battery pack will make it age. The ageing speed depends on the applied cycles, the environment, the module construction and the cell itself. Thus identical cells in a battery pack can age differently. Ageing typically results in a loss of capacity and a higher resistance. The effect of ageing is thus that an aged cell will reach a higher or lower voltage more quickly than in a new state. An aged battery pack without balancing thus comprises cells with different cell voltages. When aging more, the variation will become more distinct. The increasing internal resistance due to ageing also has the effect that the operating temperatures will rise, which causes an acceleration of the ageing.

A battery pack comprising a plurality of individual cells is among other properties characterized by its overall voltage and electrical current output. Typically, the cells are connected in series to achieve the highest possible voltage over the assembly. This voltage is the sum of the voltages of the individual cells when they are connected in series. Unfortunately, in an assembly of identical cells connected in series, the whole assembly is one chain that ceases to function when it is not interconnected. Thus, the overall performance of a multi-cell battery assembly is determined by the performance of the weakest cell. This implies that upon failure of one cell, the complete assembly fails in its performance. If the battery cells are connected in parallel, failure of one cell has less effect.

Furthermore, for safety, each cell must be limited to a maximum and a minimum voltage. This can be done by monitoring individual cell voltages, and stopping the battery pack from charging or discharging when any of the cells has reached a predetermined maximum or minimum limit. At a particular moment in time, a particular cell can become such a limitation for the whole battery pack that the appropriate way is to eliminate such cell.

A solution to the above problems would be to remove the defective cell from the battery pack. However, this is often not easy due to e.g. a pack construction that does not allow removing of an individual cell and moving of the remaining cells. These drawbacks lead to rejection of the complete battery pack.

Another solution is to introduce devices like switches connected to the cells. Such switches can enable bypassing of defective cells. Most of the existing switch solutions are large, expensive or limited in current.

US 5438173 describes a cell bypass switch particularly designed for aerospace applications. The cell bypass switch can sense a battery cell failure and automatically opens an alternate path around the failed cell, bypassing the failure and allowing the remainder of the battery system to continue its function. The cell bypass switch includes two electro-mechanical actuator assemblies which are mounted on the top end of a holder for operating two plungers respectively. Each of the electro-mechanical actuator assemblies includes two spool halves which are held together by a tight winding of a restraining wire that terminates in a bridge wire connecting two electrical terminals of the electro-mechanical actuator. Each spool, by virtue of the restraining wire winding, can restrain a spring loaded plunger. However, when sufficient electrical current is passed through the terminals and the bridge wire, the bridge wire will heat up and break under the applied tension load. This causes the restraining wire to unwind, separating the spool halves and releasing the plunger. 4

US 6249063 discloses a frangible actuator and switch that isolates a defective cell in a battery by switching an electrical circuit when the current through a fusible link exceeds a predetermined value. The high impedance of the defective cell causes most of the battery's current to flow through the fusible link. The actuator releases a spring-loaded plunger when the high current causes tensile failure of a fusible link. Electrical contacts coupled to the pre-loaded plunger are displaced by a predetermined distance, causing the contacts to move into or out of contact with electrical terminals. The actuator includes two mating parts held together by a restraining wire, which is in turn held in place by the fusible link. When the fuse melts, fails in tension or otherwise triggers due to excessive current, the restraining wire loosens and allows the two actuator parts to separate. This separation in turn permits the spring loaded plunger to advance, triggering the switching action. The actuator contains the fusible link on an insulator portion rather than on one of the mating parts, so that the connecting wires will not mechanically interfere with the separation of the mating parts.

US 5438173 and US 6249063 require moving parts under the action of springs. These devices are quite bulky and rely on the moving parts to be free to move even a long time after being put into service. Aging effects such as corrosion or rust can prevent the device from functioning properly especially when used outdoors.

GB 2375223A discloses a system for electrically isolating a cell battery from an assembly through a controllable and switchable bypass device. The bypass device, making electrical contact with an electrode pair is not discussed in detail and can be an electromagnetic relay, a semiconductor device or a meltable device to short out the cell battery. Upon activation a bypass is created over the electrode pair without electrically disconnecting the electrode pair. In fact the electrode pair is shorted out. A meltable device shorting out the cell to be isolated is unsafe as this cell can discharge easily and rapidly, causing damage to the switchable device and the devices connected to the cell battery assembly, overheating or even fire. An additional discharge system before shorting out the cell is mentioned in GB 2375223A but not discussed. A disadvantage of using such discharge system is the time it takes to discharge a cell before the shorting of the cell may begin. During that time, damage, overheating or fire may already have occurred.

### Summary of the invention

It is an object of embodiments of the present invention to provide alternative means for electrically disconnecting a first connection such as disconnecting a particular electrical appliance from a plurality of appliances and to optionally make a second connection such as to connect a replacement device or a bypass or to provide more than one function.

The above objective is accomplished by a device and a method according to embodiments of the present invention.

The present invention provides for example, a disconnection device for electrically disconnecting an electrical appliance by disconnecting at least a first connection between a plurality of electrodes and for making a second connection, the device comprising an electrically isolating holder between electrodes of the plurality of electrodes, the holder comprising an electrically conductive substance disconnectable from the plurality of electrodes to thereby break the at least one first connection under gravity forces. This reduces the number of moving parts to a low level making the design economical and reliable.

The electrically conductive substance is preferably adapted for making electrical contact with the plurality of electrodes in one part of the electrically isolating holder to make the at least one first connection when the electrical appliance is connected and to make electrical contact with at least one second connection in another part of the electrically isolating holder when the at least one first connection is disconnected.

The plurality of electrodes can comprise a first and second electrode between which the at least one first connection is made, and the at least one second connection is between a third and fourth electrode.

The plurality of electrodes can comprise a first and second electrode between which the at least one first connection is made and the at least one second connection is made between the second and a third electrode.

The electrically conductive substance can be a solid for example, or wherein the electrically conductive substance is a liquid. A solid may provide better stability than a liquid thus being more resistant to shocks or movement of the device. A liquid may provide the advantage of more rapid disconnection and connection.

As described in the some of the embodiments the disconnection of the first connection is non-reversible. This can provide the advantage of a definite operation with no possibility to return to an unstable or potentially damaging situation.

A barrier may be provided in the holder for retaining the electrically conductive substance in electrical contact with the plurality of electrodes pair before disconnection. A barrier may be designed to allow the melting and disconnection of the first connection to be dependent upon different energy levels thus allowing differing speed of operation.

For example, the barrier can be made from a material that has a melting point between the environmental temperature and the melting point of material that makes up the holder, such as a melting point between 47 and 170 °C.

The electrically conductive substance can have a shape, adapted for fitting in one part of the electrically isolating holder. This shape can be adjusted to alter speed of operation, energy input before operation, for example.

The disconnection device may include a heating element for melting the electrically conductive substance so as to allow it to displace under gravity forces. This integrated design is compact.

For example, the heating element can be any of a wire, a rod, a chemical reaction, able to produce heat upon activation by an external device.

The heating element can be positioned close to one of the electrodes of the first electrode pair, for example, or he heating element can be positioned close to the electrodes of the plurality of electrodes.

The disconnection device can include or can be designed for use with a controller for controlling functioning of the heating element.

The disconnection device can include a cooling element for cooling the conductive substance after it has been displaced. This can increase the speed with which the disconnection device reaches a stable state.

The present invention also provides a method for disconnecting an electrical appliance from an electrode pair, the method comprising:
- activation of a heating element for producing heat
- melting of part of an electrically conductive substance thermally influenced by the heat from the heating element, or melting of a barrier that prevents movement of the conductive material in liquid form, resulting in either case in breaking of a first connection between a first and/or second electrode of the first electrode pair;
- displacement of the molten part of the electrically conductive substance or liquid conductive material from one part of the holder to another part of the holder by gravity forces thereby establishing electrical contact with third and/or fourth electrode of a second electrode pair.

The method may also include solidifying of the molten part of the electrically conductive substance in another part of the holder.

In addition to the advantages given above, embodiments of the present invention may have any or any combination or all of the following advantages.

It is an advantage of a disconnection or break and make device according to embodiments of the present invention that it is low cost.

It is an advantage of a disconnection or break and make device according to embodiments of the present invention that only a limited number of components are needed.

It is an advantage of a disconnection or break and make device according to embodiments of the present invention that it does not operate by means of springs but operates under influence of gravity.

It is an advantage of a disconnection or break and make device according to embodiments of the present invention that it has a high current potential while having small dimensions.

It is an advantage of a disconnection or break and make device according to embodiments of the present invention that corrosion or oxidation of materials inside the disconnection or break and make device is prevented.

It is an advantage of a disconnection or break and make device according to embodiments of the present invention that fabrication costs of the device can stay low due to its simple design.

It is an advantage of embodiments of the present invention that electrical connections between an electrode pair are broken for disconnecting an electrical appliance before a further connection optionally is made (break before make), e.g. to connect a replacement appliance or a bypass.

Particular and preferred aspects of the invention are set out in the accompanying independent and dependent claims. Features from the dependent claims may be combined with features of the independent claims and with features of other dependent claims as appropriate and not merely as explicitly set out in the claims.

For purposes of summarizing the invention and the advantages achieved over the prior art, certain objects and advantages of the invention have been described herein above. Of course, it is to be understood that not necessarily all such objects or advantages may be achieved in accordance with any particular embodiment of the invention. Thus, for example, those skilled in the art will recognize that the invention may be embodied or carried out in a manner that achieves or optimizes one advantage or group of advantages as taught herein without necessarily achieving other objects or advantages as may be taught or suggested herein.

The above and other aspects of the invention will be apparent from and elucidated with reference to the embodiment(s) described hereinafter.

### Brief description of the drawings

The invention will now be described further, by way of example, with reference to the accompanying drawings, in which:
FIG. 1 illustrates a first embodiment of a break before make device according to the present invention.
FIG. 2 illustrates a second embodiment of a break before make device according to the present invention.
FIGs. 3 and 4 illustrate further embodiments of a break before make device according to the present invention.
FIGs. 5 and 6 illustrate yet further embodiments of the present invention.

The drawings are only schematic and are non-limiting. In the drawings, the size of some of the elements may be exaggerated and not drawn on scale for illustrative purposes. The dimensions and the relative dimensions do not necessarily correspond to actual reductions to practice of the invention.

Any reference signs in the claims shall not be construed as limiting the scope.

In the different drawings, the same reference signs refer to the same or analogous elements.

### Detailed description of illustrative embodiments

The present invention will be described with respect to particular embodiments and with reference to certain drawings but the invention is not limited thereto but only by the claims.

The terms first, second and the like in the description and in the claims, are used for distinguishing between similar elements and not necessarily for describing a sequence, either temporally, spatially, in ranking or in any other manner. It is to be understood that the terms so used are interchangeable under appropriate circumstances and that the embodiments of the invention described herein are capable of operation in other sequences than described or illustrated herein.

It is to be noticed that the term "comprising", used in the claims, should not be interpreted as being restricted to the means listed thereafter; it does not exclude other elements or steps. It is thus to be interpreted as specifying the presence of the stated features, integers, steps or components as referred to, but does not preclude the presence or addition of one or more other features, integers, steps or components, or groups thereof. Thus, the scope of the expression "a device comprising means A and B" should not be limited to devices consisting only of components A and B. It means that with respect to the present invention, the only relevant components of the device are A and B.

Reference throughout this specification to "one embodiment" or "an embodiment" means that a particular feature, structure or characteristic described in connection with the embodiment is included in at least one embodiment of the present invention. Thus, appearances of the phrases "in one embodiment" or "in an embodiment" in various places throughout this specification are not necessarily all referring to the same embodiment, but may. Furthermore, the particular features, structures or characteristics may be combined in any suitable manner, as would be apparent to one of ordinary skill in the art from this disclosure, in one or more embodiments.

Similarly it should be appreciated that in the description of exemplary embodiments of the invention, various features of the invention are sometimes grouped together in a single embodiment, figure, or description thereof for the purpose of streamlining the disclosure and aiding in the understanding of one or more of the various inventive aspects. This method of disclosure, however, is not to be interpreted as reflecting an intention that the claimed invention requires more features than are expressly recited in each claim. Rather, as the following claims reflect, inventive aspects lie in less than all features of a single foregoing disclosed embodiment. Thus, the claims following the detailed description are hereby expressly incorporated into this detailed description, with each claim standing on its own as a separate embodiment of this invention.

Furthermore, while some embodiments described herein include some but not other features included in other embodiments, combinations of features of different embodiments are meant to be within the scope of the invention, and form different embodiments, as would be understood by those in the art. For example, in the following claims, any of the claimed embodiments can be used in any combination.

It should be noted that the use of particular terminology when describing certain features or aspects of the invention should not be taken to imply that the terminology is being re-defined herein to be restricted to include any specific characteristics of the features or aspects of the invention with which that terminology is associated.

A disconnection or break and make device in the context of the present invention is a device with is able to disconnect a first connection such as to disconnect an electrical appliance from a circuit. This can be done in some embodiments without requiring necessarily interrupting the complete circuit which includes the remaining appliances. In another aspect of the present invention, optionally a new, i.e. second connection is made, e.g. a replacement device is connected in or a bypass is formed to isolate the appliance and restore function. Preferably the device is a break before make device. The break of the first connection and the optional make of the second connection can be non-reversible. The break of the first connection and the optional make of the second connection can be done "hot", i.e. while current is flowing in the circuit.

With "solid material" and "liquid material" in the context of the present invention are meant materials which, at temperatures and other environmental conditions at which the disconnection or break and make device is used, are solid or liquid, respectively.

In the description provided herein, numerous specific details are set forth. However, it is understood that embodiments of the invention may be practiced without these specific details. In other instances, well-known methods, structures and techniques have not been shown in detail in order not to obscure an understanding of this description.

In a first aspect, the present invention relates to a disconnection or break and make device for electrically disconnecting a first connection, e.g. to disconnect an electrical appliance from a plurality of electrodes such as from an electrode pair, i.e. "break". Optionally it can also form a second connection, i.e. "make", e.g. connect in a replacement device or a bypass. Preferably the device is a break before make device. Such a device is known as a "single throw, double pole" switch. The disconnection or break and make device comprises an electrically isolating holder between electrodes such as an electrode pair or a plurality of electrodes, the holder comprising an electrically conductive substance which in operating position is present between the electrodes of the electrode pair or plurality of electrodes, but which is disconnectable from the electrode pair or plurality of electrodes under gravity forces, so as to disconnect the first connection, e.g. to disconnect the electrical appliance from the electrode pair or from the plurality electrodes of electrodes. The electrical appliance can for instance be a battery cell in a battery pack, the present invention not being limited thereto. Other examples of applications, not being limited to them, for the present invention are ultracapacitor storage packages, lights sources such as lamps, other emitting devices such as loudspeakers, emergency equipment that has to be protected from failure and non-reversible safety switches. For example the devices or appliances can be connected in series. This is common for battery packs. Alternatively the devices or appliances can be connected in parallel such as light sources. Or the devices or appliances can be single appliances such as a projector with a projector lamp.

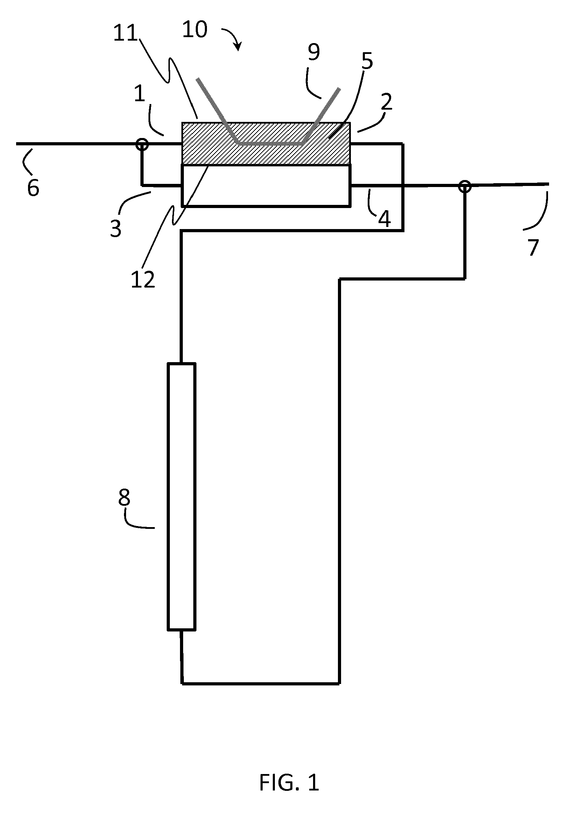

A first embodiment of a disconnection device 10 according to the present invention is illustrated in FIG. 1. The disconnection device 10 is provided between electrodes of a plurality of electrodes, e.g. between electrodes 1, 2 of a first electrode pair, for disconnection of first connection , e.g. disconnection of an electrical appliance 8 from the electrodes of the plurality of electrodes, e.g. the first electrode pair 1, 2. The disconnection device 10 comprises an electrically isolating holder 11 which is arranged between the electrodes 1, 2 of the plurality of electrodes such as the first electrode pair. The holder 11 contains an electrically conductive substance 5. When the electrical appliance 8 is connected between the plurality of electrodes 1, 2, e.g. electrodes of the first electrode pair, the electrically conductive substance 5 provides an electrical path between the electrodes 1, 2 of the electrode pair for normal operation.

The disconnection device 10 is adapted for breaking the electrical path between the electrodes of the plurality of electrodes such as between electrodes 1, 2 of the first electrode pair whenever it is desired to disconnect the first connection, e.g. disconnect the electrical appliance 8 from between these electrodes 1, 2 of the electrode pair. This breaking of the electrical path is obtained in accordance with embodiments of the present invention by displacing the electrically conductive substance 5 under gravity forces. This break is non-reversible, at least without significant effort, e.g. to remake the device. This disconnection can also be made "hot", i.e. while current is flowing.

The electrically isolating holder 11 may be composed of any material or combination of materials that are thermally and mechanically stable, such as for instance glass, ceramic, metal, plastic or a combination of materials such as e.g. a metal holder with a dielectric coating on the inside. The electrically isolating holder 11 may have any suitable shape, for instance a cubic shape or a cylindrical shape, and a number of fixing means, for instance recesses or protrusions, for attaching and positioning of the electrodes 1, 2, 3, 4 of the first and optionally second electrode pairs and the connections to the heating element 9. The holder 11 may be sealed from outside gasses, for instance to prevent corrosion of the materials inside, such as for instance the electrically conductive substance 5.

The electrically isolating holder 11 comprises the electrically conductive substance 5, which may be fit into one part of the electrically isolating holder 11, for instance an upper portion or a left, right, front or back side portion, and makes contact with the electrodes 1, 2 of the first electrode pair. In the embodiment illustrated in FIG. 1, the electrically conductive substance 5, when providing an electrical path between the electrodes 1, 2 so as to connect the electrical appliance 8 between these electrodes 1, 2, is present in an upper part of the holder 11. The empty inside of the holder 11, where no electrically conductive substance 5 is present during the time that an electrical connection is made between the first and second electrodes 1, 2, may be vacuum or filled with a specific gas, such as a gas to prevent oxidation and/or corrosion or to prevent sparks during a disconnect under power.

Optionally, embodiments of the present invention, a thin plate 12 or barrier dividing feature can be mounted as an interface between the portion of the electrically isolating holder 11 filled with the electrically conductive substance 5 and the empty inside of the electrically isolating holder 11. The thin plate 12 or barrier dividing feature forms an interface between one part and another part of the electrically isolating holder 11, for instance but not limited thereto between an upper part and a lower part of the holder 11, for retaining the electrically conductive substance 5 in electrical contact with the first electrode pair 1, 2 before disconnecting the first electrode pair 1, 2 from the electrical appliance 8. The thin plate 12 or barrier dividing feature can be composed of any material that has a melting temperature above the ambient temperature of the disconnection device 10 and below the melting point in case of a solid electrically conductive substance 5.

The electrically conductive substance 5 is able to conduct electrical current. The electrically conductive substance 5 may be a solid material such as for instance a metal, or an alloy of for instance Antimony, Bismuth, Cadmium, Lead, Tin and/or Indium. A solid electrically conductive substance 5 may have a melting temperature above the ambient working temperature of the disconnection device 10. Different combinations of materials will result in different melting points of the alloy. This way, the alloy can be tuned to the application. For example if the electrical appliance 8 is an electrical buffer combined with photovoltaic panels it has a different maximum current than if it is a battery pack in a hybrid vehicle; and in view thereof it is useful to tune the electrically conductive substance 5 differently. The tuning may be performed in such a way that the heat generated due to the maximum current and the internal resistance of the first electrode 1 - electrically conductive substance 5 - second electrode 2 combination does not melt the electrically conductive substance 5. In case the electrically conductive substance 5 is a solid material, a dividing plate 12 between portion filled with electrically conductive substance 5 and the empty portion, e.g. between the upper and lower part of the holder 11, may be present but is not required. A solid electrically conductive substance 5 has a melting point higher than the highest expected environmental temperature in service.

In alternative embodiments, the electrically conductive substance 5 may be a liquid material such as for instance mercury or conductive ink. A liquid electrically conductive substance 5 has a melting point lower than the lowest expected environmental temperature when in operation and may have a boiling point above the ambient temperature of or the highest operational temperature of the disconnection device 10 so that there is a low risk of evaporative loss. In case the electrically conductive substance 5 is a liquid, a dividing plate 12 or other barrier dividing feature is required to separate the top part of the holder 11 from the bottom part thereof, so as to retain the electrically conductive substance 5 in the top part when it has to provide an electrically conductive path between the first and the second electrodes 1, 2 of the first electrode pair.

The disconnection device 10 may comprise a heating element 9, for instance buried in the electrically conductive substance 5 and/or on or in the thin plate 12 or other barrier dividing feature, for melting the electrically conductive substance 5 and/or the thin plate 12 or dividing feature, so as to allow the electrically conductive substance 5 to move, e.g. to flow down, to the empty part of the holder 11 under influence of gravity when it is desired to disconnect the electrical appliance 8 from between the electrodes 1, 2. Alternatively, the thin plate 12 or dividing feature can act as the heating element 9 itself. Alternatively the heating element 9 can be an infra-red source such as a coil of wire brought to a high enough temperature.

The dimensioning of the heating element 9 may depend on the type and/or tuning of the electrically conductive substance 5 and/or dividing plate 12. The heating element 9 preferably is able to deliver sufficient heating power to free the electrically conductive substance 5 for moving towards the empty portion of the holder 11, for instance by melting the electrically conductive substance 5 and/or by melting the dividing plate 12.

The heating element 9 which may be used for melting the electrically conductive substance 5 and/or the thin plate 12 or dividing feature may be a wire (which may e.g. be linear, coiled, curled), a strip or a thin plate, optionally the thin plate 12 itself, positioned in or onto the electrical conductive substance 5 or the thin plate 12. It may be composed of any material that can produce heat upon being suitably driven, for instance upon application of an electrical signal, for instance a current or a voltage, to it. The conductive material 5 may be made liquid by application of a second material which can have a chemical reaction with material 5, e.g. an exothermic reaction which converts the conductive material 5 to a liquid, e.g. to a conductive liquid. Hence the heating element 9 may be in a first material adjacent to the conductive material.

Optionally, a second electrode pair comprising third and fourth electrodes 3, 4 can be mounted in the electrically isolating holder 11, for instance in the bottom part thereof, to establish a new electrical contact, .e.g. a second connection with the displaced electrically conductive substance 5 in another part of the electrically isolating holder 11. Thus the disconnection device 10 of Figure 1 can also be a break and make device, preferably is a break before make device. All details described above with respect to device 10 apply equally to device 10 when it is a break before make device. As can be seen from FIG. 1, if the electrically conductive substance 5 is displaced under gravity from the upper part of the electrically isolating holder 11 towards the bottom part thereof, electrical contact between the first and second electrodes 1, 2 of the first electrode pair, i.e. the first connection is broken, and electrical contact, i.e. a second connection between the third and fourth electrodes 3, 4 of the second electrode pair is established.

The first and second electrode pairs comprising a first and second electrode 1, 2, resp. a third and a fourth electrode 3, 4 may be composed of an electrically conductive material such as copper. It may also be made of a corrosion resistant material, e.g. stainless steel or platinum. Their shape may be designed in a way so as to mate with the fixing means, e.g. fit into the recesses or being attachable to the protrusions of the electrically isolating holder 11 so as to make an electrical contact. Measures may be taken to avoid leakage of the electrically conductive substance 5, when being in liquid state.

Upon dysfunction of the electrical appliance 8, a device such as a controller (not illustrated) connected to the heating element 9 may be activated so as to induce production of heat in the heating element 9. This may be done by hand. The electrically conductive substance 5 and/or the thin plate 12 melts and at least a part of the electrically conductive substance 5 is allowed to move from one part to another part of the electrically isolating holder 11. The displacement, driven by gravity forces, results in an electrical disconnection of the first electrode pair 1, 2, which is equivalent to an open switch, and thus also leads to electrical disconnection of the electrical appliance 8 connected to that electrode pair 1, 2.

In another part of the electrically isolating holder 11, a second electrode pair 3, 4 can be mounted to make connection with the electrically conductive substance 5 after it has been displaced from one to another part in the electrically isolating holder 11. The electrically conductive substance 5 can then make contact with the second electrode pair 3, 4 to close the electrical circuit connected to the second electrode pair 3, 4. This is equivalent to a closed switch. This way of working whereby the prior connection is disconnected before the secondary connection is activated, is called a break-before-make connection. This is advantageous as it prevents a short-circuit of the electrical appliances 8.

In case of a solid electrically conductive substance 5, when reaching the second (formerly empty) portion of the holder 11, it may become solid again due to the lower temperature present. For a quicker reaction, a cooling element such as for instance cooling fins can be provided on that formerly empty part of the holder 11. Another way of solidifying material 5 is that a chemical may be placed in the bottom of holder 11 which reacts with liquid material 5 to solidify it. For example the material in the bottom of holder 11 may be a hardener which forms with material 5 a two part cross-linking chemical system. Because the solid electrically conductive substance 5 will be solidified again as an end result, solid electrically conductive substances 5 are more appropriate than liquid electrically conductive substances 5 for instance for applications where movement is involved.

In the embodiment illustrated in FIG. 1, the first electrode pair comprises a first and second electrode 1, 2, and the second electrode pair comprises a third and fourth electrode 3, 4, resulting in four electrodes being mounted in or onto the electrically isolating holder 11. Alternatively, the first and second electrode pair can share one electrode, resulting in total in three instead of four electrodes being mounted in the electrically isolating holder.

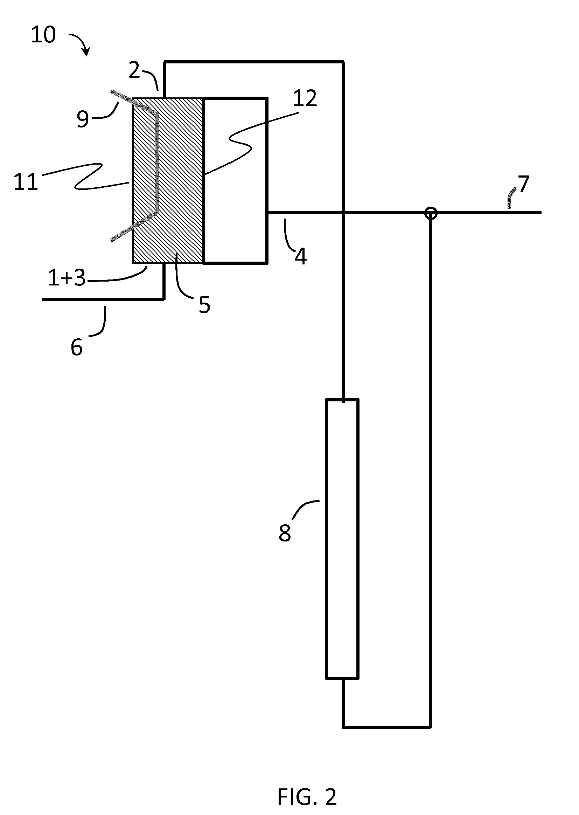

One embodiment of a break before make device 10 with a first electrode pair 1, 2 and a second electrode pair 3, 4 sharing one electrode (1=3) is illustrated in FIG. 2. In this embodiment, the electrically isolating holder 11 is divided in two portions, a left and a right portion. In the left portion, an electrically conductive substance 5 is provided, which makes a first electrical connection between the electrodes 1, 2 of the first electrode pair, which are located at the bottom and the top, respectively of the left portion of the holder 11. The electrically conductive substance 5 may be solid material, in which case no other physical dividing element is required between the left and the right portion, as the solid material may keep its position without being held by any dividing element. Nevertheless, a dividing element may be present between the left portion and the right portion. Alternatively, the electrically conductive substance 5 may be liquid material, in which case a physical dividing element between the left portion and the right portion is required in order to prevent the electrically conductive material 5 from moving, e.g. flowing, away from the left portion as long as an electrical connection between the electrodes 1, 2 of the first electrode pair is still required.

Upon malfunction or dysfunction of the appliance 8 connected between the electrodes 1, 2 of the first electrode pair, a heating element 9 may be driven or activated, so as to produce heat and melt the dividing element 12 between the left portion and the right portion and, if so required, the electrically conductive substance 5. Alternatively a chemical may be released which dissolves dividing element 12. Whichever way is selected, upon doing so, the molten or liquid electrically conductive substance will start to flow under gravity from the left portion also into the right portion of the holder 11, thus interrupting the electrical contact between the first and second electrodes 1, 2. If a fourth electrode is provided at a position of the right portion of the holder then an electrical contact to the electrically conductive substance 5 after having been displaced is available. Knowing that in the present embodiment the first electrode 1 is present at the bottom of the left portion of the holder, which is still in contact with the electrically conductive substance 5 after having been displaced, a new electrical contact or second between the first electrode 1, which also functions as the third electrode 3, and the fourth electrode 4 may be established, thus removing the appliance 8 from an electrical circuit and connecting in a further function such as a bypass or a replacement appliance.

It may be clear that elements or features which have not been described in detail with respect to the second embodiment may be similar to corresponding elements or features in the first embodiment.

While the invention has been illustrated and described in detail in the drawings and foregoing description, such illustration and description are to be considered illustrative or exemplary and not restrictive. The foregoing description details certain embodiments of the invention. It will be appreciated, however, that no matter how detailed the foregoing appears in text, the invention may be practiced in many ways. The invention is not limited to the disclosed embodiments. For instance, in the present disclosure a horizontal set-up with the electrically conductive substance 5 first being at the upper portion of the holder 11 and then being displaced towards the bottom portion is combined with presence of two disjoint electrode pairs, while a vertical set-up with the electrically conductive substance 5 first being at a left or right portion of the holder 11 and then being moved so as to occupy also part of the right or left portion of the holder is combined with the presence of two electrode pairs which share an electrode. This, however, is not limiting for the present invention. The horizontal set-up can also be implemented with two electrode pairs sharing one electrode, and the vertical set-up can also be implemented with two disjoint electrode pairs.

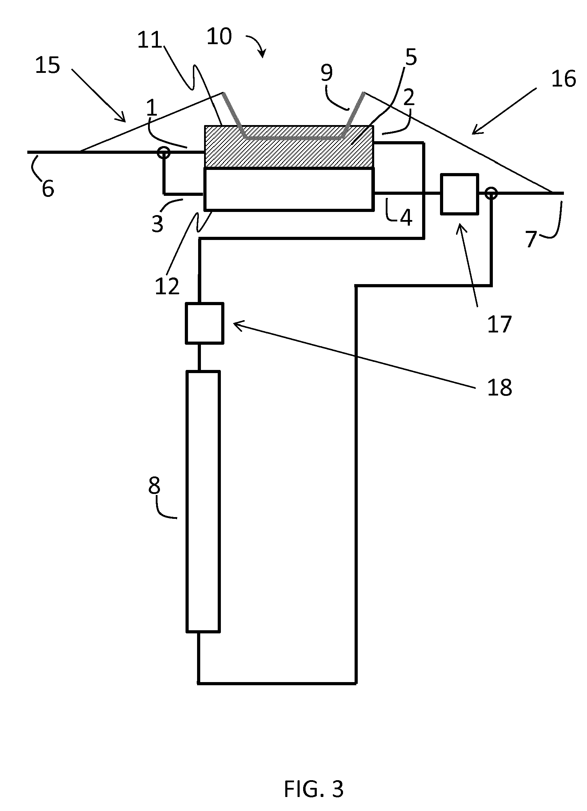

Figure 3 is a modification of the disconnection or make before make device 10 according to Figure 1. All details of the disconnection or make before break device 10 described with respect to Figure 1 are or can be included in the device 10 of Figure 3. The disconnection or break before make device 10 of Figure 3 includes in one aspect that the heating element 9 is connected by conductive lines 15, 16 to the input and the output 6, 7 so that the heating element 9 is in parallel with the appliance 8. The resistance of the heating element 9 is chosen so as to be much higher than the internal resistance of appliance 8 so that the majority of the current goes through appliance 8. If the internal resistance of the appliance 8 increases as can happen with battery cells for example or goes open circuit like a failed lamp, more of the current flows through the heating element 9 until such time as an unacceptable internal resistance is reached or an open circuit after which the increase in current in the heating element 9 causes the conductive substance to melt and to disconnect the appliance 8. In case of a solid electrically conductive substance 5, when reaching the second (formerly empty) portion of the holder 11, it may become solid again due to the lower temperature present. For a quicker reaction, a cooling element such as for instance cooling fins can be provided on that formerly empty part of the holder 11. Because the solid electrically conductive substance 5 will be solidified again as an end result, solid electrically conductive substances 5 can be more appropriate than liquid electrically conductive substances 5 for instance for applications where movement is involved. In the final state the conductive material 5 then forms a low resistance connection between lines 6 and 7 thus shorting out the heating element 8.

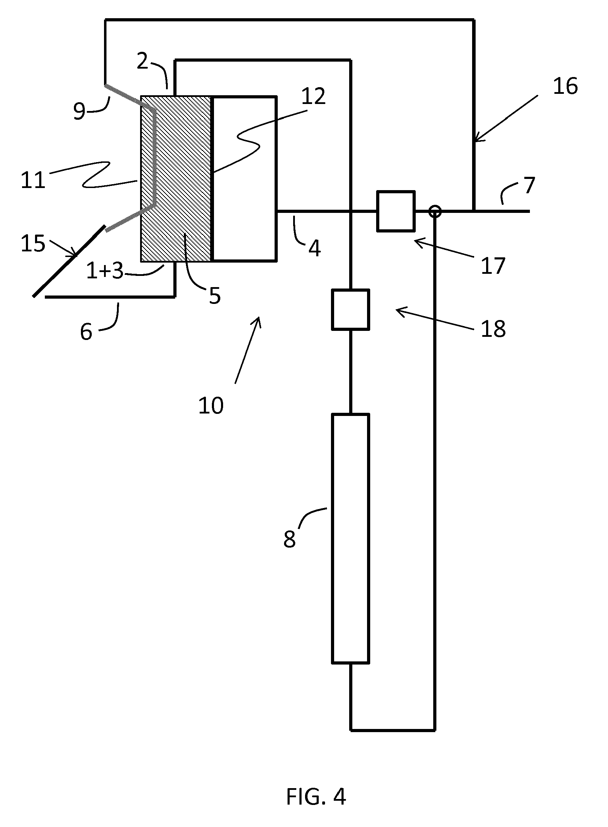

Figure 4 is a similar modification of the disconnection or make before make device 10 according to Figure 2. All details of the disconnection or make before break device 10 described with respect to Figure 2 are included in the device 10 of Figure 3. The disconnection or break before make device 10 of Figure 3 includes in one aspect that the heating element 9 is connected by conductive lines 15, 16 to the input and the output 6, 7 so that the heating element 9 is in parallel with the appliance 8. All aspects of its operation is the same as for Figure 3 and this disclosure is incorporated here as well. In this embodiment, the electrically isolating holder 11 is divided in two portions, a left and a right portion. In the left portion, an electrically conductive substance 5 is provided, which makes a first electrical connection between the electrodes 1, 2 of the first electrode pair, which are located at the bottom and the top, respectively of the left portion of the holder 11. The electrically conductive substance 5 may be solid material, in which case no other physical dividing element is required between the left and the right portion, as the solid material may keep its position without being held by any dividing element. Nevertheless, a dividing element 12 may be present between the left portion and the right portion. In this case the electrically conductive substance 5 may be liquid material, in which case the physical dividing element 12 between the left portion and the right portion is required in order to prevent the electrically conductive material 5 from moving, e.g. flowing, away from the left portion as long as an electrical connection between the electrodes 1, 2 of the first electrode pair is still required.

With respect to Figures 3 and 4, upon malfunction or dysfunction of the appliance 8 connected between the electrodes 1, 2 of the first electrode pair such as an increase in internal resistance, the heating element 9 is driven as described above, so as to produce heat and melt the conductive material 5 of Figure 3 and/or the dividing element 12 of Figure 4 which is located between the left portion and the right portion of the holder 11. Upon doing so, the molten or liquid electrically conductive substance 5 will start to flow under gravity, e.g. into the bottom of the holder 11 of Figure 3 or from the left portion of Figure 4 also into the right portion of the holder 11, thus interrupting the electrical contact between the first and second electrodes 1, 2. A fourth electrode is provided in the bottom of holder 11 of Figure 3 or at a position of the right portion of the holder 11 where electrical contact to the electrically conductive substance 5 after having been displaced is available, whereby the first electrode 1 is present at the bottom of the holder of Figure 3 or in a left portion of the holder 11 of Figure 4, which is still in contact with the electrically conductive substance 5 after having been displaced, a new electrical contact between the first electrode 1, which also functions as the third electrode 3, and the fourth electrode 4 may be established, thus removing the appliance 8 from an electrical circuit and making the second connection for a further function..

Figure 3 discloses a further modification of the disconnection or make before make device 10 according to Figure 1 and Figure 4 discloses a further modification of the disconnection or make before make device 10 according to Figure 2. In both cases one or more indicators such as light emitting devices 17, 18 are arranged so that if the conductive material 5 has moved into its second position, the indicator 17 is activated. For example if indicator 17 is a lamp such as an LED or a neon lamp, this will now be illuminated. This allows a defective appliance 8 to be identified quickly. Optionally the indicator 18 may be placed in such a way that it is activated when the appliance 8 is in normal operation. For example if indicator 18 is a lamp such as an LED or a neon lamp, this will now be illuminated. This allows a properly functioning appliance 8 to be identified quickly. The indicators 17 and 18 may also include an interface to a control network such that a central controller is informed of the status of each appliance 8 based on the outputs (or lack of output) of the indicators 17 and 18. The controller may be provided with a network interface to a wide area network such as the Internet so that the status of one or more or all of the appliances can be determined remotely and optionally can be changed remotely.

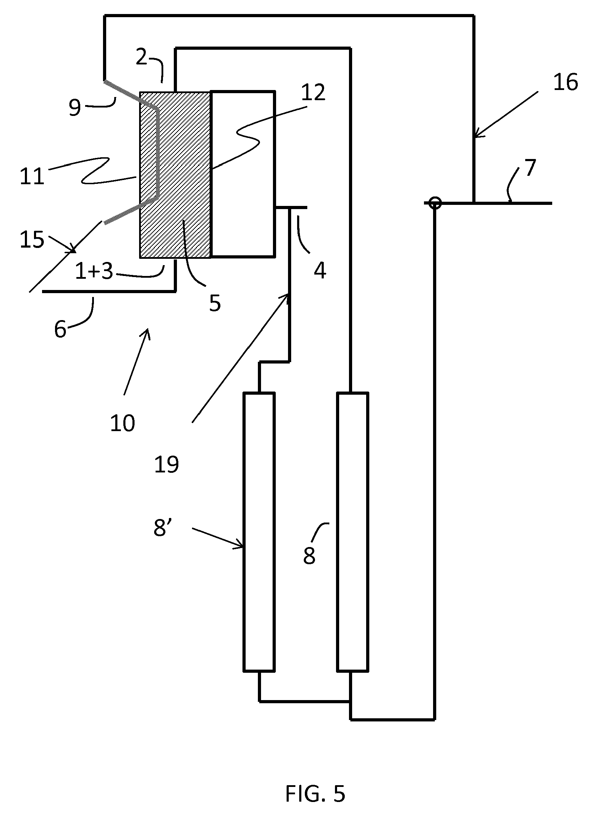

A further embodiment will be described with reference to Figure 5. It is explicitly introduced into this invention that the modifications of Figure 5 are made to any or all of the previous embodiments and these modifications are included within the scope of the invention as further embodiments.

The device of Figure 5 can be used with appliances in series or parallel or can be used with a single appliance such as a projector having a single projector lamp. There can be situations in which a bypass is not preferred but instead the connection of a replacement device is better. For example, the loss of one device such as the loss of one battery cell may be unacceptable. Certain devices such as lamps are often connected in parallel. When one lamp blows and goes open circuit the other lamps continue to be provided with current -just one position goes black. When a projector lamp blows during a presentation delay in replacing the lamp is inconvenient. Figure 5 shows how an embodiment of the present invention is able to replace the appliance 8 with an appliance 8' in a single appliance, in a series connected plurality of appliances or in a parallel arrangement of a plurality of appliances.

Figure 5 is a modification of the disconnection or make before make device 10 according to Figure 2 but the same modifications to Figure 1 are incorporated as yet another embodiment. All details of the disconnection or make before break device 10 described with respect to Figure 1 or Figure 2 are included in the device 10 of Figure 5. The disconnection or break before make device 10 of Figure 5 includes in one aspect that the heating element 9 is connected by conductive lines 15, 16 to the input and the output 6, 7 so that the heating element 9 is in parallel with the appliance 8. The resistance of the heating element 9 is chosen so as to be much higher than the internal resistance of appliance 8 so that the majority of the current goes through appliance 8. If the internal resistance of the appliance 8 increases as can happen with lamps that go open circuit or battery cells for example, more of the current flows through the heating element 9 until such time as an unacceptable internal resistance or an open circuit is reached after which the increase in current in the heating element 9 causes the conductive substance 5 to melt or the barrier 12 to melt and the liquid conductive material 5 moves to disconnect the appliance 8. The conductive material 5 then couples the replacement device 8' into the electrical circuit.

With respect to Figure 5, upon malfunction or dysfunction of the appliance 8 connected between the electrodes 1, 2 of the first electrode pair such as an increase in internal resistance or an open circuit, the heating element 9 is driven as described above, so as to produce heat and melt the conductive material 5 of Figure 3 and/or melt the dividing element 12 of Figure 4 which is located between the left portion and the right portion of the holder 11. Upon doing so, the molten or liquid electrically conductive substance 5 will start to flow under gravity, e.g. into the bottom of the holder 11 as described with respect to Figure 3 or from the left portion as described with reference to Figure 4 also into the right portion of the holder 11, thus interrupting the electrical contact between the first and second electrodes 1, 2. A fourth electrode 4 is provided as described before in the bottom of holder 11 of Figure 3 or at a position of the right portion of the holder 11 where electrical contact to the electrically conductive substance 5 after having been displaced is available, whereby the first electrode 1 is present exactly like that described above, i.e. at the bottom of the holder of Figure 3 or in a left portion of the holder 11 of Figure 4, which is still in contact with the electrically conductive substance 5 after having been displaced. Then a new electrical contact between the first 1 and fourth electrode 4 and the replacement device 8' is established through conductive line 19, thus removing the appliance 8 from an electrical circuit and replacing it with appliance 8'. The other terminal of appliance 8' is connected to input 7.

Although in the above embodiments a single function is provided by the formation of the second connection, e.g. making a bypass, or coupling in a replacement appliance 8', the present invention is not limited thereto. For example with reference to Figure 5, the second connection can couple in more than one function, e.g. not only connect in the replacement appliance 8' but also a connection can be made to an electrical motor that moves the replacement lamp 8' of a projector into the correct position in the optical path. The travel of the motor can be limited by micro-switches such that the motor stops and is disconnected when the replacement device 8' reaches its correct position.

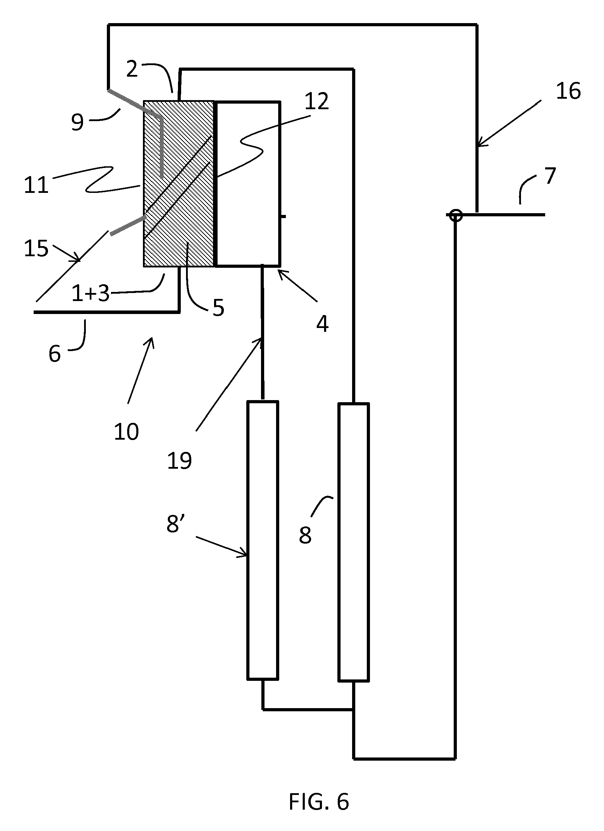

Figure 6 shows a further embodiment. Figure 6 is a modification of Figure 5 and all details described with respect to Figure 5 apply to Figure 6 with the exception that in Figure 6 a part of the current flowing through the heating element 9 goes through the conductive material 5 initially and that after the conductive material changes its position under gravity the heating element 9 is disconnected so that the circuit has the replacement device 8' connected in but the heating element 9 is not in parallel thereto. In this embodiment which can be applied to the other embodiments more than one connection is disconnected when the first connection is disconnected. Similarly more than one connection can be made when the second connection is completed.

With reference to all of the embodiments of the present invention a disconnection device such as a break before make device is disclosed with an activation of a disconnect function and a connect function has been described which uses heat to cause a conductive material to flow. This technique is preferred because it has few moving parts, link cylinders, plungers, sliding metal contacts etc. However in any of the embodiments other techniques can be used to make the conductive material flow, e.g. use of a chemical substances such as a solvent.

With reference to all of the embodiments of the present invention a disconnection device such as a break before make device can be used in an application operating at an environmental temperature of 20°C where a continuous current of 150 Amps flows, the device will be dimensioned to be 2 cm long and 1 cm in diameter and in which half of the space will be taken by a conductive substance of the material LOW281-338. During continuous operation, the temperature of the device will be around 100°C while the conductive substance 5 has a melting point between 138°C and 170°C.

## Claims

1. A disconnection device for electrically disconnecting an electrical appliance by disconnecting at least a first connection between a plurality of electrodes and for making a second connection, the device comprising an electrically isolating holder between electrodes of the plurality of electrodes, the holder comprising an electrically conductive substance disconnectable from the plurality of electrodes to thereby break the at least one first connection under gravity forces.

2. The disconnection device according to claim 1, wherein the electrically conductive substance is adapted for making electrical contact with the plurality of electrodes in one part of the electrically isolating holder to make the at least one first connection when the electrical appliance is connected and to make electrical contact with at least one second connection in another part of the electrically isolating holder when the at least one first connection is disconnected.

3. The disconnection device according to claim 2, wherein the plurality of electrodes comprises a first and second electrode between which the at least one first connection is made, and the at least one second connection is between a third and fourth electrode.

4. The disconnection device according to claim 2, wherein the plurality of electrodes comprises a first and second electrode between which the at least one first connection is made and the at least one second connection is made between the second and a third electrode.

5. A disconnection device according to any of the previous claims, wherein the electrically conductive substance is a solid, or wherein the electrically conductive substance is a liquid.

6. A disconnection device according to any previous claim wherein the disconnection of the first connection is non-reversible.

7. A disconnection device according to any of claims 5 or 6, furthermore comprising a barrier in the holder for retaining the electrically conductive substance in electrical contact with the plurality of electrodes pair before disconnection.

8. A disconnection device according to claim 7, wherein the barrier is made from a material that has a melting point between the environmental temperature and the melting point of material that makes up the holder.

9. A disconnection device according to claim 5, wherein the electrically conductive substance has a melting point between 47 and 170 °C.

10. A disconnection device according to claim 5, wherein the electrically conductive substance has a shape, adapted for fitting in one part of the electrically isolating holder.

11. A disconnection device according to claim 5, further comprising a heating element for melting the electrically conductive substance so as to allow it to displace under gravity forces.

12. A disconnection device according to claim 11,
wherein the heating element is any of a wire, a rod, a chemical reaction, able to produce heat upon activation by an external device, or
wherein the heating element is positioned close to one of the electrodes of the first electrode pair, or
wherein the heating element is positioned close to the electrodes of the plurality of electrodes.

13. A disconnection device according to any of claims 11 or 12, further comprising a controller for controlling functioning of the heating element.

14. A disconnection device according to any of claims 11 to 13, further comprising a cooling element for cooling the conductive substance after it has been displaced.

15. A method for disconnecting an electrical appliance from an electrode pair, the method comprising:
- activation of a heating element for producing heat
- melting of part of an electrically conductive substance thermally influenced by the heat from the heating element, or melting of a barrier that prevents movement of the conductive material in liquid form, resulting in either case in breaking of a first connection between a first and/or second electrode of the first electrode pair;
- displacement of the molten part of the electrically conductive substance or liquid conductive material from one part of the holder to another part of the holder by gravity forces thereby establishing electrical contact with third and/or fourth electrode of a second electrode pair.

16. The method of claim 15 further comprising solidifying of the molten part of the electrically conductive substance in another part of the holder.

## Amended claims

### Amended claims in accordance with Rule 137(2) EPC.

1. A disconnection device (10) for electrically disconnecting a first electrical appliance (8) by disconnecting at least one first connection between a plurality of electrodes and for making a second connection, the device comprising an electrically isolating holder (11) between electrodes of the plurality of electrodes, the holder (11) comprising an electrically conductive substance (5) disconnectable from the plurality of electrodes to thereby break the at least one first connection under gravity forces,
wherein the electrically conductive substance (5) is adapted for making electrical contact with the plurality of electrodes in one part of the electrically isolating holder (11) to make the at least one first connection (1-2) when the first electrical appliance (8) is connected and to make electrical contact with the second connection (3-4) in another part of the electrically isolating holder (11) when the at least one first connection is disconnected, the second connection (3-4) shorting out the first electrical appliance (8) or replacing the first electrical appliance (8) with a second electrical appliance (8').

2. The disconnection device (10) of claim 1 where in the first and second electrical appliances (8, 8') are each a battery cell.

3. The disconnection device (10) according to claim 1 or 2, wherein the plurality of electrodes comprises a first and second electrode (1 and 2) between which the at least one first connection (1-2) is made, and the second connection (3-4) is between a third and fourth electrode (3 and 4).

4. The disconnection device (10) according to claim 1 or 2, wherein the plurality of electrodes comprises a first and second electrode (1 and 2) between which the at least one first connection (1-2) is made and the second connection (3-4) is made between the second and a third electrode (2-3).

5. A disconnection device (10) according to any of the previous claims, wherein the electrically conductive substance (5) is a solid, or wherein the electrically conductive substance (5) is a liquid.

6. A disconnection device (10) according to any previous claim wherein the disconnection of the at least one first connection is non-reversible.

7. A disconnection device (10) according to any of claims 5 or 6, furthermore comprising a barrier (12) in the holder (11) for retaining the electrically conductive substance (5) in electrical contact with the plurality of electrodes before disconnection.

8. A disconnection device (10) according to claim 7, wherein the barrier (12) is made from a material that has a melting point between the environmental temperature and the melting point of material that makes up the holder (11).

9. A disconnection device (10) according to claim 5, wherein the electrically conductive substance (5) has a melting point between 47 and 170 °C.

10. A disconnection device (10) according to claim 5, wherein the electrically conductive substance(5) has a shape, adapted for fitting in one part of the electrically isolating holder (11).

11. A disconnection device (10) according to claim 5, further comprising a heating element (9) for melting the electrically conductive substance (5) so as to allow it to displace under gravity forces.

12. A disconnection device (10) according to claim 11,
wherein the heating element (9) is any of a wire, a rod, a chemical reaction, able to produce heat upon activation by an external device, or
wherein the heating element (9) is positioned close to one of the electrodes of the plurality of electrodes.

13. A disconnection device (10) according to any of claims 11 or 12, further comprising a controller for controlling functioning of the heating element (9).

14. A disconnection device according to any of claims 11 to 13, further comprising a cooling element for cooling the conductive substance (5) after it has been displaced.

15. A method for disconnecting a first electrical appliance (8) from an electrode pair, the method comprising:
- activation of a heating element (9) for producing heat;
- melting of part of an electrically conductive substance (5) thermally influenced by the heat from the heating element (9), or melting of a barrier (12) that prevents movement of the conductive material (5) in liquid form, resulting in either case in breaking of a first connection between a first and/or second electrode of a first electrode pair and disconnecting the first electrical appliance (8);
- displacement of the molten part of the electrically conductive substance (5) or liquid conductive material (5) from one part of a holder (11) to another part of the holder (11) by gravity forces thereby establishing electrical contact with a third and/or fourth electrode of a second electrode pair making a second connection such that when the first connection is disconnected, the second connection shorts out the first electrical appliance (8) or replaces the first electrical appliance (8) with a second electrical appliance (8').

16. The method of claim 15 further comprising solidifying of the molten part of the electrically conductive substance (5) in another part of the holder (11).
